# EUROPEAN PATENT APPLICATION

(11) **EP 1 130 862 A2**
(43) Date of publication of application: **05.09.2001**
(21) Application number: 00128436.3
(22) Date of filing: 22.12.2000
(51) Int. Cl.: H04L 25/03

(54) **Bidirectional Viterbi equalization**

(30) Priority: 03.03.2000 JP 2000058554
(71) Applicant: YRP Advanced Mobile Communication Systems Research Laboratories Co., Ltd., Yokosuka-shi, Kanagawa-ken 239-0847 (JP)
(72) Inventor: Udagawa, Ken, Yokosuka-shi, Kanagawa-ken 239-0845 (JP)
(74) Representative: Manitz, Finsterwald & Partner Gbr

(57) **Abstract**

A forward equalizer subjects a received signal to equalization in a forward direction with respect to time base, and outputs a signal representative of the equalization result. A backward equalizer subjects the received signal to equalization in a backward direction with respect to time base, and outputs a signal representative of the equalization result. An equalizer-less detector subjects the received signal to detection, and outputs a signal representative of the detection result. A determination is made as to whether or not both the signals outputted from the forward equalizer and the backward equalizer reside in a selection reference range. When both the signals outputted from the forward equalizer and the backward equalizer do not reside in the selection reference range, a final decision-result symbol is determined on the basis of the signals outputted from the forward equalizer, the backward equalizer, and the equalizer-less detector.

## Description

### BACKGROUND OF THE INVENTION

### Field of the Invention

This invention relates to a bi-directional Viterbi equalization device in a digital mobile communication receiver for removing a fading-based distortion from a received signal which is caused by changes in a signal propagation path or a signal transmission path.

### Description of the Related Art

In radio communications, a received signal sometimes varies in amplitude and phase due to fading caused by changes in a signal propagation path or a signal transmission path. The amplitude and phase variations result in a waveform distortion of the received signal.

It is known to provide receivers with equalizers for removing waveform distortions from received signals. The equalizers are of several types including a decision feedback type and a Viterbi type. To enable the decision feedback equalizer and the Viterbi equalizer to effectively operate, it is necessary to accurately estimate conditions of signal propagation paths (signal transmission paths). When a receiver in a mobile station is moving, the rate of fading tends to be high (the period of fading tents to be short). In this case, effective operation of the decision feedback equalizer or the Viterbi equalizer is available provided that estimation of the conditions of the signal propagation path is fast enough to follow the high-rate fading.

Some known techniques for enabling equalizers to follow fading use an RLS (recursive least-squares) algorithm and a higher-order Markov-model RLS algorithm. Under high SNR (signal-to-noise ratio) signal receiving conditions, the known techniques are sufficiently effective regardless of lags of delayed radio waves. Under lower SNR conditions, the known techniques are less effective. For example, in the case of poor SNR conditions, equalization performances provided by the known techniques are unacceptable if they are designed to attain good fading-follow-up performances. In such a case, normal detection or equalizer-less detection (for example, differential detection, comparison detection, coherent detection, synchronous detection, quasi coherent detection, or quasi synchronous detection) is better than the known equalizer-added detection for a certain range of the lag of a delayed radio wave.

In a narrow-band digital signal transmission system, the symbol rate is low and the rate of inter-symbol fading is high so that a delayed-wave time lag "τ/T" normalized with the symbol rate is small, where "τ" denotes an original delay time and "T" denotes the symbol interval. Accordingly, this system tends to fall into the above-mentioned troubled state, that is, the state where equalization performances are unacceptable under poor SNR conditions. In the case of poor SNR conditions, a single error of a recovered signal causes wrong estimation of a signal propagation path which results in continuous errors (a burst error).

Japanese published unexamined patent application 8-8794 (application number 6-140616) relates to a bi-directional equalizer. Japanese application 8-8794 specifically discloses a bi-directional maximum likelihood sequence estimation system designed to avoid a burst error by monitoring the deterioration of the communication quality, and selecting one from among forward maximum likelihood sequence estimation processing and backward maximum likelihood sequence estimation processing in response to the monitored deterioration of the communication quality.

In the system of Japanese application 8-8794, a received signal sequence is inputted into a maximum likelihood sequence estimation processor of the forward direction with respect to time base. The received signal sequence is deferred by a 1-slot delay block before being inputted into a maximum likelihood sequence estimation processor of the backward direction with respect to time base. The absolute value of the forward-direction transmission line impulse response estimated in the forward-direction processor is notified to an appraisal processor. The appraisal processor always evaluates the forward-direction communication quality in response to the notified absolute value. When the evaluated forward-direction communication quality is in an acceptable range, the maximum likelihood sequence estimation result provided by the forward-direction processor is selected and used as a final estimated signal sequence. Thus, in this case, the forward-direction processor is used. When the evaluated forward-direction likelihood sequence estimation result deteriorates and moves out of the acceptable range, the backward-direction processor is started to operate. The absolute value of the backward-direction transmission line impulse response estimated in the backward-direction processor is notified to the appraisal processor. The appraisal processor evaluates the backward-direction communication quality in response to the notified absolute value. When the evaluated backward-direction communication quality is in an acceptable range, the maximum likelihood sequence estimation result provided by the backward-direction processor is selected and used as a final estimated signal sequence. Thus, in this case, the backward-direction processor is used instead of the forward-direction processor. When the evaluated backward-direction likelihood sequence estimation result deteriorates and moves out of the acceptable range, the backward-direction processor can be replaced by the forward-direction processor.

Most of conventional bi-directional equalizers use interpolation regarding channel coefficients (tap coefficients or tap gains) during an interval for which both a forward-direction equalization result and a backward-direction equalization result are decided to be wrong. In an ultra-narrow-band digital signal transmission system, under some conditions, the rate of fading is very high, and the level of a received signal tends to drop several times during a 1-frame interval. In the case where a receiver of the ultra-narrow-band digital signal transmission system is provided with the conventional bi-directional equalizer, during an interval for which both the forward-direction equalization result and the backward-direction equalization result are decided to be wrong, the level of a received signal remarkably varies and hence it is difficult to estimate channel coefficients by interpolation. This results in a damage to the ability to avoid a burst error, and causes an increased error rate.

### SUMMARY OF THE INVENTION

It is an object of this invention to provide a bi-directional Viterbi equalization device for a receiver in a narrow-band signal transmission system which can improve receiving performances under low SNR conditions.

It is another object of this invention to provide a bi-directional Viterbi equalization device which has improved performances under conditions where high-rate fading exists, and the time lag of a delayed radio wave is small and the SNR is low.

A first aspect of this invention provides a bi-directional Viterbi equalization device comprising a forward equalizer subjecting a received signal to forward equalization in a forward direction with respect to time base, and outputting a signal representative of a result of the forward equalization; a backward equalizer subjecting the received signal to backward equalization in a backward direction with respect to time base, and outputting a signal representative of a result of the backward equalization; an equalizer-less detector subjecting the received signal to detection, and outputting a signal representative of a result of the detection; first means for determining whether or not both the signals outputted from the forward equalizer and the backward equalizer reside in a selection reference range; and second means for, when the first means determines that both the signals outputted from the forward equalizer and the backward equalizer do not reside in the selection reference range, determining a final decision-result symbol on the basis of the signals outputted from the forward equalizer, the backward equalizer, and the equalizer-less detector.

A second aspect of this invention is based on the first aspect thereof, and provides a bi-directional Viterbi equalization device wherein the forward equalizer comprises a forward adaptive Viterbi equalizer outputting an estimated forward-equalization symbol and a likelihood of the estimated forward-equalization symbol; the backward equalizer comprises a backward adaptive Viterbi equalizer outputting an estimated backward-equalization symbol and a likelihood of the estimated backward-equalization symbol; the equalizer-less detector outputs a detection-result symbol; the first means comprises means for determining whether or not both the likelihoods of the estimated forward-equalization symbol and the estimated backward-equalization symbol are smaller than a threshold value; and the second means comprises means for, when it is determined that both the likelihoods of the estimated forward-equalization symbol and the estimated backward-equalization symbol are smaller than the threshold value, determining the final decision-result symbol on the basis of the estimated forward-equalization symbol, the estimated backward-equalization symbol, and the detection-result symbol.

A third aspect of this invention is based on the second aspect thereof, and provides a bi-directional Viterbi equalization device further comprising means for calculating a noise level of the received signal, and means for varying the threshold value in accordance with the calculated noise level.

A fourth aspect of this invention is based on the first aspect thereof, and provides a bi-directional Viterbi equalization device wherein the second means comprises means for, when the first means determines that both the signals outputted from the forward equalizer and the backward equalizer do not reside in the selection reference range, determining a final decision-result symbol by a majority decision using symbols represented by the signals outputted from the forward equalizer, the backward equalizer, and the equalizer-less detector.

A fifth aspect of this invention is based on the fourth aspect thereof, and provides a bi-directional Viterbi equalization device wherein the second means comprises means for converting the symbols represented by the signals outputted from the forward equalizer, the backward equalizer, and the equalizer-less detector into corresponding bit sets, and means for implementing the majority decision using the bit sets on a bit-by-bit basis.

A sixth aspect of this invention is based on the second aspect thereof, and provides a bi-directional Viterbi equalization device wherein the equalizer-less detector outputs a likelihood of the detection-result symbol, and the second means comprises means for, when it is determined that both the likelihoods of the estimated forward-equalization symbol and the estimated backward-equalization symbol are smaller than the threshold value, comparing the likelihoods of the estimated forward-equalization symbol, the estimated backward-equalization symbol, and the detection-result symbol and determining the final decision-result symbol on the basis of a result of the comparing.

A seventh aspect of this invention is based on the first aspect thereof, and provides a bi-directional Viterbi equalization device wherein the equalizer-less detector comprises at least one of a differential detector, a comparison detector, a coherent detector, a synchronous detector, a quasi coherent detector, and a quasi synchronous detector.

### BRIEF DESCRIPTION OF THE DRAWINGS

Fig. 1 is a function block diagram of a bi-directional Viterbi equalization device according to a first embodiment of this invention.

Fig. 2 is a function block diagram of a bi-directional Viterbi equalization device according to a second embodiment of this invention.

Fig. 3 is a flowchart of a segment of a program for an output selection block in Fig. 2.

Fig. 4 is a diagram of a first example of conditions of forward-equalization likelihoods pf(k) and backward-equalization likelihoods pb(k).

Fig. 5 is a diagram of a second example of conditions of forward-equalization likelihoods pf(k) and backward-equalization likelihoods pb(k).

Fig. 6 is a diagram of a third example of conditions of forward-equalization likelihoods pf(k) and backward-equalization likelihoods pb(k).

Fig. 7 is a diagram of the relations between the bit error rate (BER) and the carrier-to-noise ratio (CNR) in the equalization device of Fig. 2 and comparative devices.

Fig. 8 is a function block diagram of a bi-directional Viterbi equalization device according to a third embodiment of this invention.

### DESCRIPTION OF THE PREFERRED EMBODIMENTS

### First Embodiment

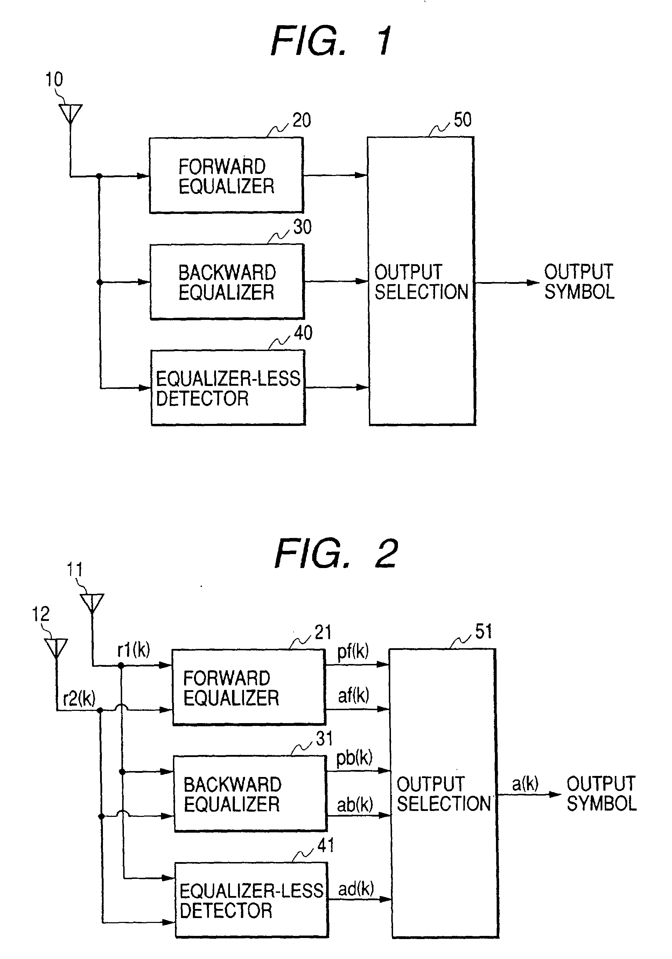

Fig. 1 shows a bi-directional Viterbi equalization device according to a first embodiment of this invention. The equalization device of Fig. 1 includes a forward equalizer 20, a backward equalizer 30, and an equalizer-less detector (a normal detector) 40 which follow an antenna 10. An output selection block 50 follows the forward equalizer 20, the backward equalizer 30, and the normal detector 40.

A signal received by the antenna 10 is fed to the forward equalizer 20, the backward equalizer 30, and the normal detector 40 via a radio-frequency amplifier, a mixer, and a band pass filter (not shown). The received signal has successive frames which contain training symbol sequences.

The forward equalizer 20 is of a Viterbi type. The forward equalizer 20 subjects the received signal to equalization processing which includes a step of estimating, from a received signal sequence (a received symbol sequence), a transmitted signal sequence (a transmitted symbol sequence) best matching the received signal sequence according to a Viterbi algorithm. The equalization processing by the forward equalizer 20 is along the normal direction (the forward direction) with respect to time base. The forward equalizer 20 outputs the estimated signal sequence (the estimated symbol sequence) to the output selection block 50. Thus, the forward equalizer 20 includes a symbol deciding section or a symbol detecting section.

Also, the backward equalizer 30 is of the Viterbi type. The backward equalizer 30 subjects the received signal to equalization processing which includes a step of estimating, from a received signal sequence (a received symbol sequence), a transmitted signal sequence (a transmitted symbol sequence) best matching the received signal sequence according to a Viterbi algorithm. The equalization processing by the backward equalizer 30 is along the reverse direction (the backward direction) with respect to time base. The backward equalizer 30 outputs the estimated signal sequence (the estimated symbol sequence) to the output selection block 50. Thus, the backward equalizer 30 includes a symbol deciding section or a symbol detecting section.

The equalizer-less detector 40 includes, for example, a differential detector, a comparison detector, a coherent detector, a synchronous detector, a quasi coherent detector, or a quasi synchronous detector. The equalizer-less detector 40 subjects the received signal to detection processing which corresponds to a modulation system related to the received signal. The equalizer-less detector 40 outputs a detection-result signal sequence (a detection-result symbol sequence) to the output selection block 50.

The output selection block 50 is formed by, for example, a digital signal processor, a CPU, or a similar device programmed to implement signal processing as follows. The output selection block 50 selects one from among symbols represented by the output signals of the forward equalizer 20, the backward equalizer 30, and the equalizer-less detector 40. The output selection block 50 outputs the selected symbol as a final decision-result symbol.

The output selection block 50 compares parameter values represented by or related to the output signals of the forward equalizer 20 and the backward equalizer 30 with a predetermined threshold value. The parameter values use the values of powers calculated on the basis of channel coefficients estimated in the forward equalizer 20 and the backward equalizer 30. In this case, the values of powers are notified to the output selection block 50 from the forward equalizer 20 and the backward equalizer 30. Alternatively, the parameter values may be the likelihoods outputted from the forward equalizer 20 and the backward equalizer 30 together with the estimated symbols.

During a 1-frame interval or a 1-subframe interval between training symbol sequences for which the parameter value represented by or related to the output signal of the forward equalizer 20 remains equal to or greater than the predetermined threshold value, the output selection block 50 selects the symbols represented by the output signal of the forward equalizer 20 as final decision-result symbols. The output selection block 50 outputs the final decision-result symbols.

During a 1-frame interval or a 1-subframe interval between training symbol sequences for which the parameter value represented by or related to the output signal of the forward equalizer 20 remains smaller than the predetermined threshold value while the parameter value represented by or related to the output signal of the backward equalizer 30 remains equal to or greater than the predetermined threshold value, the output selection block 50 selects the symbols represented by the output signal of the backward equalizer 30 as final decision-result symbols. The output selection block 50 outputs the final decision-result symbols.

During a 1-frame interval or a 1-subframe interval between training symbol sequences in which which both the parameter values represented by or related to the output signals of the forward equalizer 20 and the backward equalizer 30 drop below the predetermined threshold value, the output selection block 30 implements symbol selection as follows. The output selection block 30 detects the specific symbol position at which the parameter value related to the forward equalizer 20 drops below the predetermined threshold value, and also the specific symbol position at which the parameter value related to the backward equalizer 30 drops below the predetermined threshold value. The detected specific symbol positions are referred to as the detected specific forward-equalization symbol position and the detected specific backward-equalization symbol position, respectively. The output selection block 30 determines the relation among the detected specific forward-equalization symbol position, the detected specific backward-equalization symbol position, and the end of the 1-frame interval or the 1-subframe interval.

In the case where the detected specific forward-equalization symbol position is closer to the end of the 1-frame interval or the 1-subframe interval than the detected specific backward-equalization symbol position is, the output selection block 50 selects the symbols represented by the output signal of the forward equalizer 20 as final decision-result symbols for symbols before the detected specific forward-equalization symbol position. Also, in this case, the output selection block 50 selects the symbols represented by the output signal of the backward equalizer 30 as final decision-result symbols for symbols at and after the detected specific forward-equalization symbol position. The output selection block 50 outputs the final decision-result symbols.

In the case where the detected specific backward-equalization symbol position is closer to the end of the 1-frame interval or the 1-subframe interval than the detected specific forward-equalization symbol position is, the output selection block 50 selects the symbols represented by the output signal of the forward equalizer 20 as final decision-result symbols for symbols before the detected specific forward-equalization symbol position. The output selection block 50 outputs the final decision-result symbols. Also, in this case, the output selection block 50 selects the symbols represented by the output signal of the backward equalizer 30 as final decision-result symbols for symbols after the detected specific backward-equalization symbol position. The output selection block 50 outputs the final decision-result symbols. For each of symbols between the detected specific forward-equalization symbol position and the detected specific backward-equalization symbol position, the output selection block 50 selects one from among the symbols represented by the output signals of the forward equalizer 20, the backward equalizer 30, and the equalizer-less detector 40 on a decision-by-majority basis (a majority-decision basis). When the symbols represented by the output signals of the forward equalizer 20, the backward equalizer 30, and the equalizer-less detector 40 differ from each other, the output selection block 50 selects the symbol represented by the output signal of the equalizer-less detector 40. The output selection block 50 may select the symbol represented by the output signal of the forward equalizer 20 or the backward equalizer 30. The output selection block 50 outputs the selected symbol as a final decision-result symbol.

In an ultra-narrow-band digital signal transmission system, the transmission rate (the symbol rate) is low, and the maximum value of a delayed-wave time lag "τ/T" normalized with the symbol rate corresponds to a quarter of one symbol or less, where "τ" denotes an original delay time and "T" denotes the symbol interval. Under some signal receiving conditions, it is difficult for a conventional equalizer to provide desired performances for such a system. On the other hand, a normal equalizer-less detector such as a differential detector, a comparison detector, a coherent detector, a synchronous detector, a quasi coherent detector, or a quasi synchronous detector is expected to have a certain level of performances for such a system. Under signal receiving conditions with high-rate fading, the level of a received signal drops frequently, and each signal drop is limited in a short time. The pattern of errors by the normal equalizer-less detector is of a random type different from a burst type generated in a conventional equalizer.

Accordingly, in the first embodiment of this invention, the pattern of errors by the normal detector 40 is of the random type. During an interval for which the output selection block 50 decides both the output signals of the forward equalizer 20 and the backward equalizer 30 to be probably wrong, the output selection block 50 finally decides symbols by referring to the output signal of the normal detector 40 in addition to the output signals of the forward equalizer 20 and the backward equalizer 30. Referring to the output signal of the normal detector 40 increases the reliability of final decision-result symbols.

The first embodiment of this invention may be modified as follows. A first modification includes a differential detector and a coherent detector connected between the antenna 10 and the output selection block 50. In the first modification, the output selection block 50 evaluates at least two of the output signals of the forward equalizer 20, the backward equalizer 30, the differential detector, and the coherent detector. In addition, the output selection block 50 selects one from among the symbols represented by the output signals of the forward equalizer 20, the backward equalizer 30, the differential detector, and the coherent detector on the basis of the evaluation results. The output selection block 50 outputs the selected symbol as a final decision-result symbol.

A second modification includes a differential detector, a coherent detector, and a quasi coherent detector connected between the antenna 10 and the output selection block 50. In the second modification, the output selection block 50 evaluates at least two of the output signals of the forward equalizer 20, the backward equalizer 30, the differential detector, the coherent detector, and the quasi coherent detector. In addition, the output selection block 50 selects one from among the symbols represented by the output signals of the forward equalizer 20, the backward equalizer 30, the differential detector, the coherent detector, and the quasi coherent detector on the basis of the evaluation results. The output selection block 50 outputs the selected symbol as a final decision-result symbol.

In a third modification, the output selection block 50 monitors the received signal. The output selection block 50 calculates the noise level of the received signal from the state of the received signal and the channel coefficients estimated in the forward equalizer 20 and the backward equalizer 30. The output selection block 50 varies the threshold value for the evaluation of the parameter values in accordance with the calculated noise level. Specifically, the output selection block 50 increases the threshold value as the calculated noise level rises.

### Second Embodiment

Fig. 2 shows a bi-directional Viterbi equalization device according to a second embodiment of this invention. The equalization device of Fig. 2 includes a forward equalizer 21, a backward equalizer 31, and an equalizer-less detector (a normal detector) 41 which follow antennas 11 and 12 composing a two-branch diversity. An output selection block 51 follows the forward equalizer 21, the backward equalizer 31, and the normal detector 41.

A signal r1(k) received by the antenna 11 is fed to the forward equalizer 21, the backward equalizer 31, and the normal detector 41 via a radio-frequency amplifier, a mixer, and a band pass filter (not shown). The received signal r1(k) has successive frames which contain training symbol sequences. A signal r2(k) received by the antenna 12 is fed to the forward equalizer 21, the backward equalizer 31, and the normal detector 41 via a radio-frequency amplifier, a mixer, and a band pass filter (not shown). The received signal r2(k) has successive frames which contain training symbol sequences.

The forward equalizer 21 is of an adaptive Viterbi type. The forward equalizer 21 subjects the received signals r1(k) and r2(k) to adaptive equalization processing which includes a step of estimating, from received signal sequences (received symbol sequences), a transmitted signal sequence (a transmitted symbol sequence) best matching the received signal sequences according to a Viterbi algorithm. The equalization processing by the forward equalizer 21 is along the normal direction (the forward direction) with respect to time base. The forward equalizer 21 outputs the estimated signal sequence (the estimated symbol sequence) to the output selection block 51. The estimated signal sequence has a sequence of estimated symbols af(k) also referred to as estimated forward-equalization symbols af(k), where "k" denotes a variable symbol identification number or a variable symbol order number representative of a symbol position within a related frame. In addition, the forward equalizer 21 outputs a sequence of likelihoods pf(k) to the output selection block 51. The likelihoods pf(k) correspond to the estimated symbols af(k), respectively. As understood from the above description, the forward equalizer 21 includes a symbol deciding section or a symbol detecting section.

The forward equalizer 21 uses a known SOVA (soft-output Viterbi algorithm). Thus, each of the likelihoods pf(k) is expressed by a probability variable between 0.0 and 1.0. As a probability pf(k) increases, a corresponding estimated symbol af(k) is deemed more correct. There is a high chance that a burst error occurs from a symbol position at which a probability pf(k) goes small. As will be described later, a probability of 0.5 is used by the output selection block 51 as a predetermined threshold value.

Also, the backward equalizer 31 is of the adaptive Viterbi type. The backward equalizer 31 subjects the received signals r1(k) and r2(k) to equalization processing which includes a step of estimating, from received signal sequences (received symbol sequences), a transmitted signal sequence (a transmitted symbol sequence) best matching the received signal sequences according to a Viterbi algorithm. The equalization processing by the backward equalizer 31 is along the reverse direction (the backward direction) with respect to time base. The backward equalizer 31 outputs the estimated signal sequence (the estimated symbol sequence) to the output selection block 51. The estimated signal sequence has a sequence of estimated symbols ab(k) also referred to as estimated backward-equalization symbols ab(k). In addition, the backward equalizer 31 outputs a sequence of likelihoods pb(k) to the output selection block 51. The likelihoods pb(k) correspond to the estimated symbols ab(k), respectively. As understood from the above description, the backward equalizer 31 includes a symbol deciding section or a symbol detecting section.

Also, the backward equalizer 31 uses the known SOVA. Thus, each of the likelihoods pb(k) is expressed by a probability variable between 0.0 and 1.0. As a probability pb(k) increases, a corresponding estimated symbol ab(k) is deemed more correct. There is a high chance that a burst error occurs from a symbol position at which a probability pb(k) goes small. As will be described later, a probability of 0.5 is used by the output selection block 51 as a predetermined threshold value.

The equalizer-less detector 41 includes a differential detector (a comparison detector). The differential detector 41 subjects the received signals r1(k) and r2(k) to detection processing which corresponds to a modulation system related to the received signals r1(k) and r2(k). The differential detector 41 outputs a detection-result signal sequence (a detection-result symbol sequence) to the output selection block 51. The detection-result signal sequence has a sequence of detection-result symbols ad(k).

The output selection block 51 is formed by, for example, a digital signal processor, a CPU, or a similar device programmed to implement signal processing as follows. The output selection block 51 selects one from among symbols af(k), ab(k), and ad(k) represented by the output signals of the forward equalizer 21, the backward equalizer 31, and the differential detector 41 in response to likelihoods pf(k) and pb(k) notified by the forward equalizer 21 and the backward equalizer 31. The output selection block 51 outputs the selected symbol as a final decision-result symbol a(k).

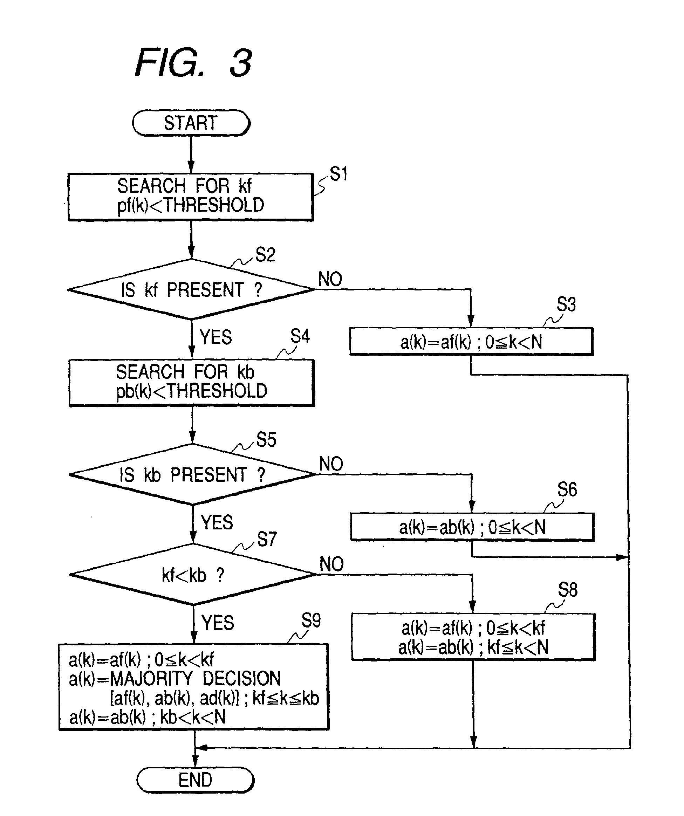

The output selection block 51 operates in accordance with a program stored in its internal ROM. Fig. 3 shows a segment of the program which is executed for every frame.

With reference to Fig. 3, a first step 51 of the program segment compares forward-equalization likelihoods pf(k) in the present frame with a predetermined threshold value equal to 0.5. On the basis of the comparison results, the step S1 searches the forward-equalization likelihood sequence for a specific forward-equalization symbol position "kf" at which the sequence drops below the predetermined threshold value (for the first time). After the step S1, the program advances to a step S2.

The step S2 determines whether the specific forward-equalization symbol position "kf' is present or absent. When the specific forward-equalization symbol position "kf" is absent, that is, when all the forward-equalization likelihoods pf(k) are equal to or greater than the predetermined threshold value, the program advances from the step S2 to a step S3. When the specific forward-equalization symbol position "kf" is present, the program advances from the step S2 to a step S4.

The step S3 sets final decision-result symbols a(k) to estimated forward-equalization symbols af(k) in the present frame. Thus, the estimated forward-equalization symbols af(k) are used as the final decision-result symbols a(k). After the step S3, the current execution cycle of the program segment ends.

The step S4 compares backward-equalization likelihoods pb(k) in the present frame with the predetermined threshold value (equal to 0.5). On the basis of the comparison results, the step S4 searches the backward-equalization likelihood sequence for a specific backward-equalization symbol position "kb" at which the sequence drops below the predetermined threshold value (for the first time). After the step S4, the program advances to a step S5.

The step S5 determines whether the specific backward-equalization symbol position "kb" is present or absent. When the specific backward-equalization symbol position "kb" is absent, that is, when all the backward-equalization likelihoods pb(k) are equal to or greater than the predetermined threshold value, the program advances from the step S5 to a step S6. When the specific forward-equalization symbol position "kf' is present, the program advances from the step S5 to a step S7.

The step S6 sets the final decision-result symbols a(k) to estimated backward-equalization symbols ab(k) in the present frame. Thus, the estimated backward-equalization symbols ab(k) are used as the final decision-result symbols a(k). After the step S6, the current execution cycle of the program segment ends.

The step S7 compares the specific forward-equalization symbol position "kf" and the specific backward-equalization symbol position "kb" with each other to determine which of the two is closer to the end of the present frame. When the value of the specific forward-equalization symbol position "kf" is equal to or greater than the value of the specific backward-equalization symbol position "kb" (kf ≧ kb), that is, when the specific forward-equalization symbol position "kf" is closer to the end of the present frame than the specific backward-equalization symbol position "kb" is, the program advances from the step S7 to a step S8. When the value of the specific forward-equalization symbol position "kf" is smaller than the value of the specific backward-equalization symbol position "kb" (kf < kb), that is, when the specific forward-equalization symbol position "kf" is not closer to the end of the present frame than the specific backward-equalization symbol position "kb" is, the program advances from the step S7 to a step S9.

The step S8 sets the final decision-result symbols a(k) to the estimated forward-equalization symbols af(k) for symbols at positions (0 ≦ k < kf) from the first position (k=0) to the position immediately before the specific forward-equalization symbol position "kf" (k=kf). Thus, in this case, the estimated forward-equalization symbols af(k) are used as the final decision-result symbols a(k). The step S8 sets the final decision-result symbols a(k) to the estimated backward-equalization symbols ab(k) for symbols at positions (kf ≦ k < N) from the specific forward-equalization symbol position "kf" (k=kf) to the end of the present frame (which corresponds to k=N). Thus, in this case, the estimated backward-equalization symbols ab(k) are used as the final decision-result symbols a(k). After the step S8, the current execution cycle of the program segment ends.

The step S9 sets the final decision-result symbols a(k) to the estimated forward-equalization symbols af(k) for symbols at positions (0 ≦ k < kf) from the first position (k=0) to the position immediately before the specific forward-equalization symbol position "kf" (k=kf). Thus, in this case, the estimated forward-equalization symbols af(k) are used as the final decision-result symbols a(k). The step S9 sets the final decision-result symbols a(k) to the estimated backward-equalization symbols ab(k) for symbols at positions (kb < k < N) from the position immediately after the specific backward-equalization symbol position "kb" (k=kb) to the end of the present frame (which corresponds to k=N). Thus, in this case, the estimated backward-equalization symbols ab(k) are used as the final decision-result symbols a(k). For each of symbols at positions (kf ≦ k ≦ kb) between the specific forward-equalization symbol position "kf" and the specific backward-equalization symbol position "kb", the step S9 selects one from among the estimated forward-equalization symbol af(k), the estimated backward-equalization symbol ab(k), and the detection-result symbol ad(k) on a decision-by-majority basis (a majority-decision basis). In this case, the step S9 sets the final decision-result symbol a(k) to the selected symbol. Thus, the selected symbol is used as the final decision-result symbol a(k). In this case, when the estimated forward-equalization symbol af(k), the estimated backward-equalization symbol ab(k), and the detection-result symbol ad(k) differ from each other, the step S9 selects the detection-result symbol ad(k) and hence sets the final decision-result symbol a(k) to the detection-result symbol ad(k). Thus, the detection-result symbol ad(k) is used as the final decision-result symbol a(k). The step S9 may select the estimated forward-equalization symbol af(k) or the estimated backward-equalization symbol ab(k) instead of the detection-result symbol ad(k). After the step S9, the current execution cycle of the program segment ends.

Preferably, the step S9 implements the majority decision as follows. The step S9 converts each of the estimated forward-equalization symbol af(k), the estimated backward-equalization symbol ab(k), and the detection-result symbol ad(k) into a set of bits. As a result, there are provided first bit sets originating from the estimated forward-equalization symbol af(k), the estimated backward-equalization symbol ab(k), and the detection-result symbol ad(k), respectively. For each of bits in a second set corresponding to the final decision-result symbol a(k), the step S9 selects one from among corresponding bits in the first bit sets on the majority-decision basis. Thus, the step S9 determines the second bit set corresponding to the final decision-result symbol a(k). Then, the step S9 converts the determined second bit set into the final decision-result symbol a(k).

For example, the modulation system related to the received signals r1(k) and r2(k) is QPSK. In this case, each of the estimated forward-equalization symbol af(k), the estimated backward-equalization symbol ab(k), and the detection-result symbol ad(k) can change among a "0" state, a "1" state, a "2" state, and a "3" state. The step S9 converts each of the estimated forward-equalization symbol af(k), the estimated backward-equalization symbol ab(k), and the detection-result symbol ad(k) into a 2-bit set. Specifically, the step S9 converts a "0"-state symbol, a "1"-state symbol, a "2"-state symbol, and a "3"-state symbol into a bit set "00", a bit set "01", a bit set "10", and a bit set "11", respectively. As a result, there are provided first 2-bit sets originating from the estimated forward-equalization symbol af(k), the estimated backward-equalization symbol ab(k), and the detection-result symbol ad(k), respectively. For each of bits in a second 2-bit set corresponding to the final decision-result symbol a(k), the step S9 selects one from among corresponding bits in the first bit sets on the majority-decision basis. Thus, the step S9 determines the second 2-bit set corresponding to the final decision-result symbol a(k). Then, the step S9 converts the determined second 2-bit set into the final decision-result symbol a(k).

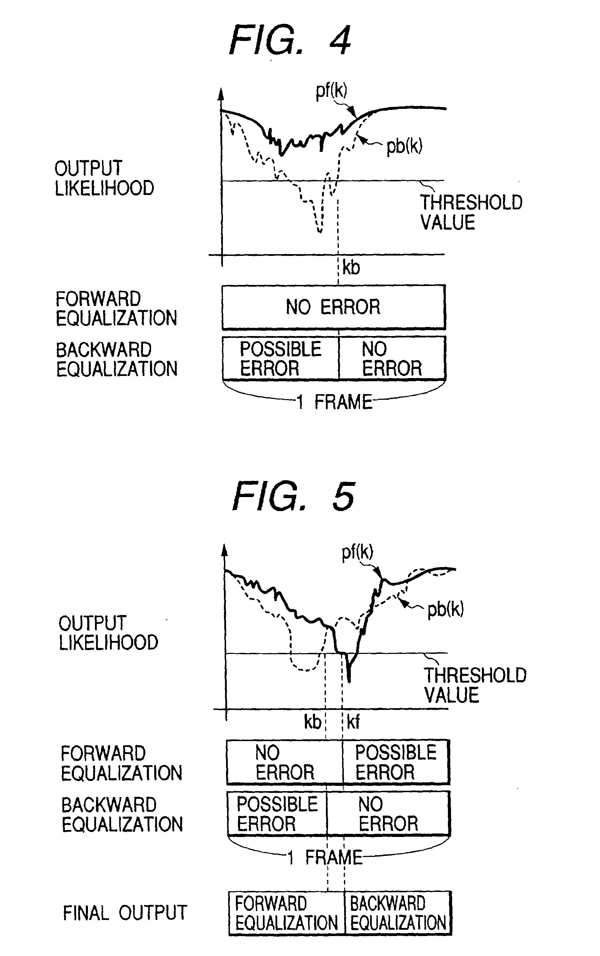

Fig. 4 shows a first example of conditions of the forward-equalization likelihoods pf(k) and the backward-equalization likelihoods pb(k) which occur during one frame. In Fig. 4, all the forward-equalization likelihoods pf(k) in the frame are greater than the predetermined threshold value, while some of the backward-equalization likelihoods pb(k) in the frame are smaller than the predetermined threshold value. In this case, since all the forward-equalization likelihoods pf(k) in the frame are greater than the predetermined threshold value, the program in Fig. 3 advances from the step S2 to the step S3. Therefore, the estimated forward-equalization symbols af(k) are used as the final decision-result symbols a(k) in the frame.

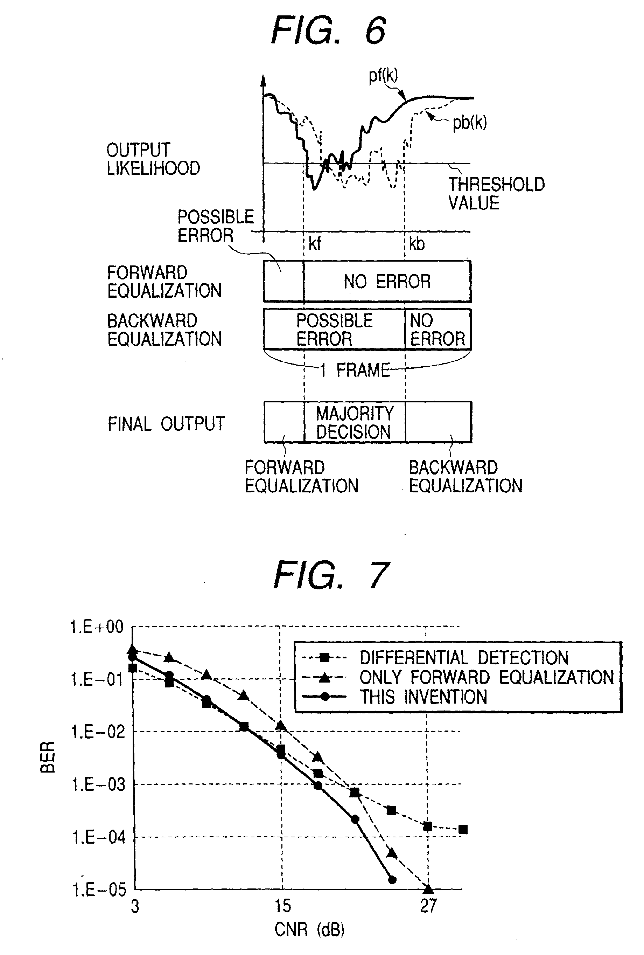

Fig. 5 shows a second example of conditions of the forward-equalization likelihoods pf(k) and the backward-equalization likelihoods pb(k) which occur during one frame. In Fig. 5, a group of some successive forward-equalization likelihoods pf(k) are smaller than the predetermined threshold value, and also a group of some successive backward-equalization likelihoods pb(k) are smaller than the predetermined threshold value. The line connecting the forward-equalization likelihoods pf(k), that is, the sequence of the forward-equalization likelihoods pf(k), drops below the predetermined threshold value at a symbol position (a specific forward-equalization symbol position) "kf". The line connecting the backward-equalization likelihoods pb(k), that is, the sequence of the backward-equalization likelihoods pb(k), drops below the predetermined threshold value at a symbol position (a specific backward-equalization symbol position) "kb". In Fig. 5, the specific forward-equalization symbol position "kf" is closer to the end of the frame than the specific backward-equalization symbol position "kb" is. Therefore, the program in Fig. 3 advances from the step S7 to the step S8. In this case, the estimated forward-equalization symbols af(k) are used as the final decision-result symbols a(k) for symbols before the specific forward-equalization symbol position "kf". The estimated backward-equalization symbols ab(k) are used as the final decision-result symbols a(k) for symbols at and after the specific forward-equalization symbol position "kf".

Fig. 6 shows a third example of conditions of the forward-equalization likelihoods pf(k) and the backward-equalization likelihoods pb(k) which occur during one frame. In Fig. 6, some of the forward-equalization likelihoods pf(k) are smaller than the predetermined threshold value, and also some of the backward-equalization likelihoods pb(k) are smaller than the predetermined threshold value. The line connecting the forward-equalization likelihoods pf(k), that is, the sequence of the forward-equalization likelihoods pf(k), drops below the predetermined threshold value for the first time at a symbol position (a specific forward-equalization symbol position) "kf". The line connecting the backward-equalization likelihoods pb(k), that is, the sequence of the backward-equalization likelihoods pb(k), drops below the predetermined threshold value at a symbol position (a specific backward-equalization symbol position) "kb". In Fig. 6, the specific backward-equalization symbol position "kb" is closer to the end of the frame than the specific forward-equalization symbol position "kf" is. Therefore, the program in Fig. 3 advances from the step S7 to the step S9. In this case, the estimated forward-equalization symbols af(k) are used as the final decision-result symbols a(k) for symbols before the specific forward-equalization symbol position "kf". The estimated backward-equalization symbols ab(k) are used as the final decision-result symbols a(k) for symbols after the specific backward-equalization symbol position "kb". For each of symbols between the specific forward-equalization symbol position "kf" and the specific backward-equalization symbol position "kb", one is selected from among the estimated forward-equalization symbol af(k), the estimated backward-equalization symbol ab(k), and the detection-result symbol ad(k) on a decision-by-majority basis (a majority-decision basis), and the selected symbol is used as the final decision-result symbol a(k).

During the interval between the specific forward-equalization symbol position "kf" and the specific backward-equalization symbol position "kb", both the sequence of the forward-equalization likelihoods pf(k) and the sequence of the backward-equalization likelihoods pb(k) are smaller than the predetermined threshold value due to one of the following error-related conditions (1), (2), and (3). The condition (1) is that both the sequence of the estimated forward-equalization symbols af(k) and the sequence of the estimated backward-equalization symbols ab(k) have burst errors. The condition (2) is that one of the sequence of the estimated forward-equalization symbols af(k) and the sequence of the estimated backward-equalization symbols ab(k) has a single-type error while the other has a burst error. The condition (3) is that both the sequence of the estimated forward-equalization symbols af(k) and the sequence of the estimated backward-equalization symbols ab(k) have single-type errors.

Under the condition (1), when the detection-result symbol ad(k) is correct, a correct symbol is recovered as a final decision-result symbol a(k) by the majority decision responsive to the estimated forward-equalization symbol af(k), the estimated backward-equalization symbol ab(k), and the detection-result symbol ad(k) apart from the case where both the estimated forward-equalization symbol af(k) and the estimated backward-equalization symbol ab(k) are wrong. As viewed in the interval in question, the burst errors can be regarded as random errors having an error rate of 0.5. Therefore, the probability at which both the estimated forward-equalization symbol af(k) and the estimated backward-equalization symbol ab(k) are wrong is equal to 0.25. Accordingly, the error rate of the final decision-result symbols a(k) in the interval in question can be a half of that available in a conceivable design where the final decision-result symbols a(k) are decided only in response to the estimated forward-equalization symbols af(k) and the estimated backward-equalization symbols ab(k).

Under the condition (2), when the detection-result symbol ad(k) is correct, the detection-result symbol ad(k) and the error-free one of the estimated forward-equalization symbol af(k) and the estimated backward-equalization symbol ab(k) enable a correct symbol to be surely recovered as a final decision-result symbol a(k) by the majority decision. Accordingly, it is possible to prevent the burst error from adversely affecting the final decision-result symbols a(k).

Under the condition (3), the probability at which two of the estimated forward-equalization symbol af(k), the estimated backward-equalization symbol ab(k), and the detection-result symbol ad(k) are wrong is very small or negligible. Accordingly, a correct symbol can surely be recovered as a final decision-result symbol a(k) by the majority decision.

Fig. 7 shows the results of the evaluation of the equalization device of Fig. 2 and first and second comparative 2-branch-diversity devices in 2-wave Rayleigh fading environments corresponding to a typical mobile communication path. The first comparative 2-branch-diversity device included only a differential detector (a comparison detector). The second comparative 2-branch-diversity device included only a forward equalizer. The conditions of the evaluation of the equalization device of Fig. 2 are as follows. The modulation system was π/4-DQPSK. The roll-off factor of transmission and reception filters was equal to 0.2. The access system was FDMA. The carrier frequency was 400 MHz. The signal band width was 6.25 kHz. The bit rate was equal to 9.6 kbps. The delay time was 20 µs (τ/T approximately equal to 1/10). The Doppler frequency was 20 Hz. The forward equalizer 21 and the backward equalizer 31 were adaptive Viterbi equalizers using RLS algorithms considering up to first-order differentiation terms. The adaptive Viterbi equalizers executed Viterbi calculations with 3 taps and 16 states. The coefficient of a lapse of memory in RLS was equal to 0.9. The conditions of the evaluation of the first and second comparative 2-branch-diversity devices were similar to those of the equalization device of Fig. 2.

In Fig. 7, the ordinate denotes bit error rates (BER), and the abscissa denotes carrier-to-noise ratios (CNR). The black squares in Fig. 7 indicate the evaluation-result characteristics of the first comparative 2-branch-diversity device which included only the differential detector (the comparison detector). The black triangles in Fig. 7 indicate the evaluation-result characteristics of the second comparative 2-branch-diversity device which included only the forward equalizer. The black circles in Fig. 7 indicate the evaluation-result characteristics of the equalization device of Fig. 2. It is understood from Fig. 7 that the equalization device of Fig. 2 improves over the second comparative 2-branch-diversity device (including only the forward equalizer) by at most 3 dB in CNR.

The second embodiment of this invention may be modified as follows. In a first modification, the output selection block 51 monitors the received signals r1(k) and r2(k). The output selection block 51 is informed of channel coefficients estimated in the forward equalizer 21 and the backward equalizer 31. The output selection block 51 calculates the noise level of the received signals r1(k) and r2(k) from the states of the received signals rl(k) and r2(k) and the channel coefficients. The output selection block 51 varies the threshold value for the evaluation of the forward-equalization likelihoods pf(k) and the backward-equalization likelihoods pb(k) in accordance with the calculated noise level. Specifically, the output selection block 51 increases the threshold value as the calculated noise level rises.

In a second modification, the equalizer-less detector 41 includes a coherent detector, a synchronous detector, a quasi coherent detector, or a quasi synchronous detector.

A third modification includes a plurality of equalizer-less detectors of different types which replace the equalizer-less detector 41. In the third modification, a final decision-result symbol a(k) is determined on the basis of the output signals of the forward equalizer 21, the backward equalizer 31, and the equalizer-less detectors.

### Third Embodiment

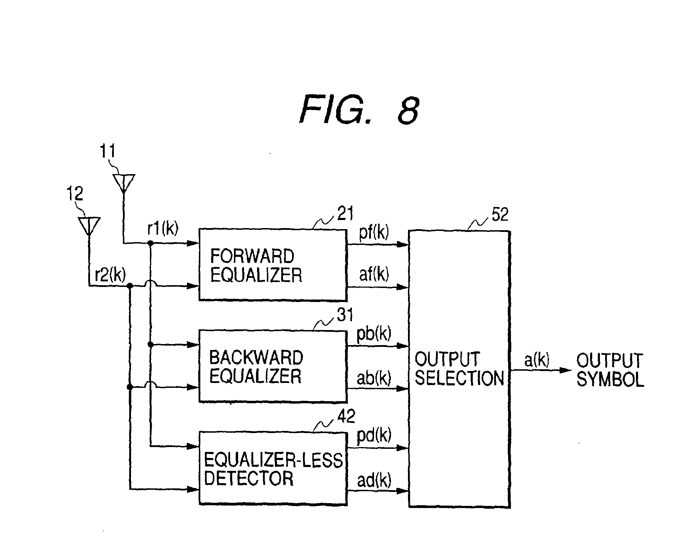

Fig. 8 shows a bi-directional Viterbi equalization device according to a third embodiment of this invention. The equalization device of Fig. 8 is similar to the equalization device of Fig. 2 except for design changes mentioned hereinafter. The equalization device of Fig. 8 includes an equalizer-less detector 42 and an output selection block 52 instead of the equalizer-less detector 41 and the output selection block 51 (see Fig. 2) respectively.

The equalizer-less detector 42 includes a differential detector (a comparison detector). The differential detector 42 subjects the received signals r1(k) and r2(k) to detection processing which includes maximum-likelihood sequence estimation. The differential detector 42 outputs a sequence of detection-result symbols ad(k) to the output selection block 52. In addition, the differential detector 42 outputs a sequence of likelihoods pd(k) to the output selection block 52. The likelihoods pd(k) correspond to the detection-result symbols ad(k), respectively.

During the interval for which both the sequence of the forward-equalization likelihoods pf(k) and the sequence of the backward-equalization likelihoods pb(k) are smaller than the predetermined threshold value, the output selection block 52 determines each final decision-result symbol a(k) as follows. The output selection block 52 compares the likelihoods pf(k), pb(k), and pd(k) for the estimated forward-equalization symbol af(k), the estimated backward-equalization symbol ab(k), and the detection-result symbol ad(k) respectively. The output selection block 52 determines the final decision-result symbol a(k) on the basis of the result of the comparison. Specifically, the output selection block 52 adds the estimated forward-equalization symbol af(k), the estimated backward-equalization symbol ab(k), and the detection-result symbol ad(k) weighted by the corresponding likelihoods pf(k), pb(k), and pd(k) respectively. The output selection block 52 determines the final decision-result symbol a(k) on the basis of the result of the addition.

The third embodiment of this invention may be modified as follows. In a first modification, the output selection block 52 monitors the received signals r1(k) and r2(k). The output selection block 52 is informed of channel coefficients estimated in the forward equalizer 21 and the backward equalizer 31. The output selection block 52 calculates the noise level of the received signals r1(k) and r2(k) from the states of the received signals r1(k) and r2(k) and the channel coefficients. The output selection block 52 varies the threshold value for the evaluation of the forward-equalization likelihoods pf(k) and the backward-equalization likelihoods pb(k) in accordance with the calculated noise level. Specifically, the output selection block 52 increases the threshold value as the calculated noise level rises.

In a second modification, the equalizer-less detector 42 includes a coherent detector, a synchronous detector, a quasi coherent detector, or a quasi synchronous detector.

A third modification includes a plurality of equalizer-less detectors of different types which replace the equalizer-less detector 42. In the third modification, a final decision-result symbol a(k) is determined on the basis of the output signals of the forward equalizer 21, the backward equalizer 31, and the equalizer-less detectors.

## Claims

1. A bi-directional Viterbi equalization device comprising:
a forward equalizer subjecting a received signal to forward equalization in a forward direction with respect to time base, and outputting a signal representative of a result of the forward equalization;
a backward equalizer subjecting the received signal to backward equalization in a backward direction with respect to time base, and outputting a signal representative of a result of the backward equalization;
an equalizer-less detector subjecting the received signal to detection, and outputting a signal representative of a result of the detection;
first means for determining whether or not both the signals outputted from the forward equalizer and the backward equalizer reside in a selection reference range; and
second means for, when the first means determines that both the signals outputted from the forward equalizer and the backward equalizer do not reside in the selection reference range, determining a final decision-result symbol on the basis of the signals outputted from the forward equalizer, the backward equalizer, and the equalizer-less detector.

2. A bi-directional Viterbi equalization device as recited in claim 1, wherein the forward equalizer comprises a forward adaptive Viterbi equalizer outputting an estimated forward-equalization symbol and a likelihood of the estimated forward-equalization symbol; the backward equalizer comprises a backward adaptive Viterbi equalizer outputting an estimated backward-equalization symbol and a likelihood of the estimated backward-equalization symbol; the equalizer-less detector outputs a detection-result symbol; the first means comprises means for determining whether or not both the likelihoods of the estimated forward-equalization symbol and the estimated backward-equalization symbol are smaller than a threshold value; and the second means comprises means for, when it is determined that both the likelihoods of the estimated forward-equalization symbol and the estimated backward-equalization symbol are smaller than the threshold value, determining the final decision-result symbol on the basis of the estimated forward-equalization symbol, the estimated backward-equalization symbol, and the detection-result symbol.

3. A bi-directional Viterbi equalization device as recited in claim 2, further comprising means for calculating a noise level of the received signal, and means for varying the threshold value in accordance with the calculated noise level.

4. A bi-directional Viterbi equalization device as recited in claim 1, wherein the second means comprises means for, when the first means determines that both the signals outputted from the forward equalizer and the backward equalizer do not reside in the selection reference range, determining a final decision-result symbol by a majority decision using symbols represented by the signals outputted from the forward equalizer, the backward equalizer, and the equalizer-less detector.

5. A bi-directional Viterbi equalization device as recited in claim 4, wherein the second means comprises means for converting the symbols represented by the signals outputted from the forward equalizer, the backward equalizer, and the equalizer-less detector into corresponding bit sets, and means for implementing the majority decision using the bit sets on a bit-by-bit basis.

6. A bi-directional Viterbi equalization device as recited in claim 2, wherein the equalizer-less detector outputs a likelihood of the detection-result symbol, and the second means comprises means for, when it is determined that both the likelihoods of the estimated forward-equalization symbol and the estimated backward-equalization symbol are smaller than the threshold value, comparing the likelihoods of the estimated forward-equalization symbol, the estimated backward-equalization symbol, and the detection-result symbol and determining the final decision-result symbol on the basis of a result of the comparing.

7. A bi-directional Viterbi equalization device as recited in claim 1, wherein the equalizer-less detector comprises at least one of a differential detector, a comparison detector, a coherent detector, a synchronous detector, a quasi coherent detector, and a quasi synchronous detector.
